# EUROPÄISCHE PATENTSCHRIFT

(11) **EP 1 961 288 B1**
(45) Veröffentlichungstag und Bekanntmachung des Hinweises auf die Patenterteilung: **24.02.2010**
(21) Anmeldenummer: 07122478.6
(22) Anmeldetag: 06.12.2007
(51) Int. Cl.: A01D 43/08, A01F 29/12

(54) **Vorrichtung zur Einstellung der Position des Nachbeschleunigungsorgans in einer landwirtschaftlichen Erntemaschine**
Device for setting the position of the post-acceleration organ in an agricultural harvesting machine
Dispositif destiné au réglage de la position de l'organe d'accélération ultérieure dans une moissonneuse agricole

(30) Priorität: 26.02.2007 DE 102007009587
(43) Veröffentlichungstag der Anmeldung: 27.08.2008
(73) Patentinhaber: CLAAS Selbstfahrende Erntemaschinen GmbH, 33428 Harsewinkel (DE)
(72) Erfinder: Baaken, Verena, 47809 Krefeld (DE)

(56) Entgegenhaltungen:
- EP-A- 1 145 616
- DE-A1- 10 231 316

## Beschreibung

Die Erfindung betrifft eine Vorrichtung zur Einstellung der Position des Nachbeschleunigungsorgans innerhalb einer landwirtschaftlichen Erntemaschine, insbesondere innerhalb eines Feldhäckslers gemäß dem Oberbegriff des Anspruchs 1.

Die Tendenz zu immer leistungsstärkeren Feldhäckslern mit breiter dimensionierten Emtevorsätzen bedingt höhere Leistungsanforderungen auch an das Nachbeschleunigungsorgan, Zusätzlich haben unterschiedliche Witterungsbedingungen, Durchsatzmassen und -arten Einfluss auf die Qualität und die Sicherheit der Erntegutförderung innerhalb der Erntemaschine. Beispielsweise können beim Einzug von Gras unter feuchten Bedingungen und bei unterschiedlicher Fördergutmasse Klumpenbildungen auftreten, die den Erntegutstrom erheblich beeinträchtigen und im Extremfall zur Verstopfung führen können. Diese Beeinträchtigungen wirken sich sowohl auf die Beförderung innerhalb der Erntemaschine als auch beim Auswurf aus.

In der DE 19732722 ist ein Nachbeschleunigungsorgan in der Form eines Fördergebläses für einen Feldhäcksler beschrieben. Dieses Fördergebläse soll im Fall auftretender Verstopfungen schnell ausräumbar sein. Daher ist in unmittelbarer Nähe des Fördergebläses ein Verschleißblech im Eingangsschacht an einem Rahmenteil angebracht. Beide Organe sind abnehmbar, wodurch der Zugriff in das Innere des Gebläses ermöglicht wird, um die Verstopfungen zu entfernen, Zudem sind die Organe alternativ zueinander abstandsveränderlich ausgestaltet, so dass der Spalt zwischen diesen und dem Rotationskreis des Förderrotors manuell verändert werden kann.

Der Nachteil der in der DE 19732722 offenbarten Ausführung liegt darin, dass aufgrund der ausschließlich manuellen Eingriffsmöglichkeiten der hierfür benötigte Zeitaufwand erheblich ist. Unter diesen Bedingungen ist eine spontane Reaktion auf Erntegutflussveränderungen unwirtschaftlich und unmittelbar ohne Unterbrechung des Ernteverfahrens nicht ausführbar, Zudem bedarf es einer exakten Montage der verschiedenen Stellschrauben, da bereits ein geringfügiges Abweichen einer einzelnen Verstellschraube Unebenheiten an der Innenseite des Rotationsgehäuses verursacht. Hierdurch bleibt insbesondere feuchtes Erntegut haften und kann zur verstärkten Anhäufung und Erntegutflussstörung führen. Aus diesem Grund bedarf es der regelmäßigen Kontrolle dieses Abschnittes. Dies gilt auch im Hinblick auf seine Dichtheit, Insgesamt ist es nach der in der DE 19732722 offenbarten Erfindung nicht möglich ohne Störung der Feldarbeit auf Gutflussveränderungen zu reagieren. Dies kann zudem nur manuell erfolgen, was zu einer erheblichen Stillstandszeit und Montagearbeit führt. Sollte auf die Reinigungs- und Montagearbeiten verzichtet werden, wird zudem ein Erntegutverlust hingenommen, da durch den verschlechterten Erntegutfluss ein optimaler Erntegutwurfstrahl in ein Transportfahrzeug verhindert wird und dadurch -je nach Witterungsbedingungen und Windeinflüssen - bis zu 30 % des Erntegutes verloren gehen kann.

Im Weiteren ist in der DE 102 31 316 A1 ein mittels eines Achsverschiebungsmechanismus verstellbares Nachbeschleunigungsorgan eines Feldhäckslers offenbart Dabei greift der Achsverschiebungsmechanismus, der in einem am Maschinengehäuse ortsfest angeordneten Stellrahmen gelagert ist, mindestens einseitig an der Achse des Nachbeschleunigungsorgans an. Zur Führung des Nachbeschleunigungsorgans weist selbiges integrierte Gleitblöcke auf, welche auf an dem Stellrahmen parallel angeordnete Führungsflächen hin und zurück gleiten können. Die Verschiebung des Nachbeschleunigungsorgans erfolgt hierbei mittels vier Führungsachsen, die paarweise in den Achsverschiebungsmechanismus integriert sind, wobei die Führungsachsen ihrerseits mit einem Ende an dem jeweiligen Gleitblock fixiert sind, so dass die Fixierung des Nachbeschleunigungsorgans gekoppelt mit dem Achsverschiebemechanismus erfolgt.

Der Nachteil dieser Ausführung besteht darin, dass im Falle des Ausfalls bzw. einer Demontage des Achsverschiebemechanismus eine ausreichende Fixierung des Nachbeschleunigungsorgans nicht mehr gewährleistet ist und der Erntevorgang nicht vor Behebung des Schadens fortgesetzt werden kann.

Deshalb liegt der Erfindung die Aufgabe zugrunde, die Nachteile des zitierten Standes der Technik zu vermeiden und auf einfache und kostengünstige Weise eine genaue und automatische Verstellung der Spaltweite zwischen dem Rotationskreis des Nachbeschleunigungsorgans und dem Maschinengehäuse zu gewährleisten, ohne dafür Unterbrechungen des Ernteprozesses in Kauf nehmen zu müssen.

Diese Aufgabe wird erfindungsgemäß durch das kennzeichnende Merkmal des Patentanspruchs 1 gelöst, wobei in den weiteren Patentansprüchen Merkmale aufgeführt sind, die diese Lösung in vorteilhafter Weise weiterentwickeln.

Indem die Fixierung des Nachbeschleunigungsorgans entkoppelt vom Verschiebemechanismus erfolgt, wird sichergestellt, dass einerseits eine genaue Einstellung des Erntegutdurchgangsspaltes zwischen dem Rotationskreis des Nachbeschleunigungsorgans und dem Maschinengehäuse erfolgen und andererseits im Falle eines Ausfalls bzw. Schadens am Verschiebemechanismus, die Fixierung des Nachbeschleunigungsorgans uneingeschränkt erhalten bleiben kann. Eine Unterbrechung des Ernteprozesses kann somit verhindert werden.

In vorteilhafter Weiterbildung der Erfindung sind zur Fixierung des Nachbeschleunigungsorgans diesem jeweils endseitig Gleitvorrichtungen zugeordnet, deren bodenseitige Unterkanten auf mit dem Maschinengehäuse verbundenen Führungsflächen aufliegen, wobei die Gleitvorrichtungen mittels wenigstens einem Fixierungselement am Maschinengehäuse verschiebebeweglich/reibschlüssig fixiert sind, so dass auf konstruktiv besonders einfache Weise eine Verschiebemöglichkeit des Nachbeschleunigungsorgans geschaffen wird, bei gleichzeitiger Fixierung des Nachbeschteunigungsorgans mittels zumindest eines Fixierungselementes am Maschinengehäuse, losgelöst vom Versehiebemechanismus zur Verstellung des Nachbeschleunigungsorgans.

Dadurch, dass die Verstellung des Nachbeschleunigungsorgans mittels eines als Getriebesystem ausgebildeten Verschiebemechanismus erfolgt, kann eine sehr präzise Verstellung des Erntegutdurchgangsspaltes erreicht werden. Verstärkt wird dies insbesondere durch die Entkopplung der Fixierung des Nachbeschleunigungsorgans vom Verschiebemechanismus, wodurch die auf das Nachbeschleunigungsorgan einwirkenden Kräfte nicht auf den Verschiebemechanismus übertragen werden, weiches vorteilhaft eine Verschleißreduzierung am Verschiebemechanismus bewirkt.

Indem das Getriebesystem im Wesentlichen von wenigstens zwei jeweils einen Endes mit den Gleitvorrichtungen des Nachbeschleunigungsorgans drehbar verbundenen Getriebegliedern gebildet wird, welche anderen Endes mit einem weiteren um eine Kurvenbahn drehbar gelagerten Getriebeglied in Wirkverbindung stehen, wobei durch das weitere Getriebeglied die Lage der wenigstens zwei Getriebeglieder synchron verstellbar ist, kann die Bewegbarkeit und damit die Verschiebung des Nachbeschleunigungsorgans auf konstruktiv einfache Weise erreicht werden. Dabei ist das weitere Getriebeglied vorteilhaft als durchgehende Welle ausgebildet und zur Erreichung einer besonders Festigkeit mittels wenigstens zwei Lagerelementen drehbar gelagert am Maschinengehäuse befestigt.

Eine bevorzugte Ausführung besteht darin, dem weiteren Getriebeglied wenigstens ein teleskopierbares Stellglied zuzuordnen, wobei das teleskopierbare Stellglied einen Endes über einem Gelenkpunkt mit einem dem weiteren Getriebeglied zugeordneten Hebelarm und anderen Endes über einen Gelenkpunkt mit einer am Maschinegehäuse befestigten Haltevorrichtung verbunden ist, so dass unter Einsatz möglichst weniger Getriebeglieder eine synchrone und feinfühlige Verstellung des Nachbeschleunigungsorgans in horizontaler Richtung erreicht werden kann. Dies ist aufgrund der hohen Drehzahl des Nachbeschleunigungsorgans und den hierbei auftretenden Kräften zwingend. Bei einer ungleichmäßigen Positionsveränderung käme es anderenfalls zu einer Schrägstellung des Nachbeschleunigungsorgans im Förderschacht und damit zu Beschädigungen und zu Stillstandzeiten der landwirtschaftlichen Erntemaschine. Um die Genauigkeit der Verstellung zu verbessern, erfolgt die Verstellung vorteilhaft mittels eines elektrischen Stellmotors oder mittels eines Hydraulikzylinders. Um dennoch einen vorab festgelegten Verstellungsbereich des Nachbeschleunigungsorgans nicht verlassen zu können, ist dem weiteren Getriebeglied eine zwei Endlagen aufweisende Rückhaltevorrichtungen zugeordnet, so dass selbst bei einer Fehlfunktion des Elektromotors bzw. des Hydraulikzylinders der maximal zulässige Verstellbereich nicht verlassen werden kann und somit Schäden am Nachbeschleunigungsorgan selbst oder am Maschinengehäuse verhindert werden können.

In einer weiteren vorteilhaften Weiterbildung der Erfindung erfolgt die Verstellung des Nachbeschleunigungsorgans in Abhängigkeit von der Position der dem Nachbeschleunigungsorgan nachgeordneten Überladevorrichtung. Im Fall, dass das Erntegut auf ein weiter entferntes Transportfahrzeug überladen werden soll, erfordert dies eine stärkere Wurfleistung des Nachbeschleunigungsorgans, so dass eine Verringerung des Emtegutdurchgangsspaltes zwischen dem Rotationsumfangskreis des Nachbeschleunigungsorgans und der Innenwand des Maschinenegehäuses erfolgt und damit eine Beschleunigung des Erntegutes erreicht wird.

Aufgrund der Tatsache, dass bei rauem und/oder aggressivem Fördergut an den am Nachbeschleunigungsorgan vorhandenen Schaufeln Verschleiß auftritt, erfolgt in vorteilhafter Weiterbildung der Erfindung die Verstellung der Achse des Nachbeschleunigungsorgans in Abhängigkeit vom Verschleißzustand der dem Nachbeschleunigungsorgan zugeordneten Schaufeln, so dass die vorab gewählte Spaltweite zwischen Nachbeschleuniger und Maschinengehäuse selbst bei langen Ernteeinsätzen konstant bleibt.

Im einfachsten Fall ist in der Fahrerkabine der landwirtschaftlichen Erntemaschine eine Bedieneinheit zur Bedienung des Verschiebemechanismus vorhanden, so dass der Bediener jederzeit, beispielhaft beim Auftreten von sich ändernden Ernteguteigenschaften, eine manuelle Verstellung der Spaltweite zwischen Rotationskreis des Nachbeschleunigungsorgans und dem Maschinengehäuse zur Erreichung einer optimalen Wurfleistung vornehmen kann.

Weitere vorteilhafte Ausgestaltungen sind Gegenstand weiterer Unteransprüche und werden nachfolgend an Hand von Zeichnungen näher erläutert.

Im folgenden wird die Erfindung anhand eines Ausführungsbeispiels dargestellt Es zeigen:
- Figur 1: einen selbstfahrenden Feldhäcksler in Seitenansicht
- Figur 2: eine vergrößerte Darstellung des in der Fig. 1 mit "A" gekennzeichneten Bereichs mit dem Verschiebemechanismus
- Figur 3: eine Draufsicht des Nachbeschleunigungsorgans in Schnittdarstellung

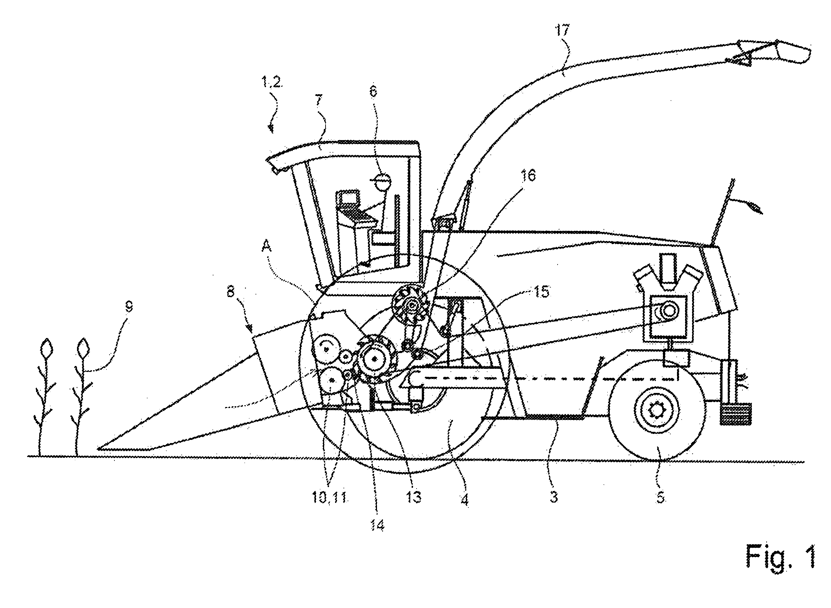

Figur 1 zeigt eine als selbstfahrender Feldhäcksler 1 ausgeführte landwirtschaftliche Erntemaschine 2 in Seitenansicht und Schnittdarstellung. Diese baut sich auf einen Rahmen 3 auf, der von vorderen und rückwärtigen Rädern 4, 5 getragen wird. Die Bedienung des Foldhäckslers 1 erfolgt vom Bediener 6 von der Fahrerkabine 7 aus, von der aus, das dem Feldhäcksler 1 frontseitig zugeordnete Vorsatzgerät 8 einsehbar ist, welches im Arbeitsbetrieb des Feldhäckslers 1 Erntegut 9 aufnimmt, schneidet und es den nachgeordneten Einzugs- und Vorpresswalzen 10,11 zuführt. Die Einzugs- und Vorpresswalzen 10, 11 leiten das Erntegut 9 der nachgeordneten und rotierenden, mit Messern 12 besetzten Häckseltrommel 13 zu, welche das Erntegut 9 an einer Gegenschneide 14 zerkleinert. Das zerkleinerte Erntegut 9 wird sodann an eine Nachzerkleinerungseinrichtung 15 übergeben, bevor es von dem Nachbeschleunigungsorgan 16 angenommen wird. Aufgabe der Nachzerkleinerungseinrichtung 15 ist, bei der Ernte von Maispflanzen die Maiskörner anzuschlagen. Die Nachzerkleinerungseinrichtung 15 kann daher auch vollständig weggelassen werden, soweit ein Anschlagen des Erntegutes 9 - wie beispielsweise bei Gras - nicht erforderlich ist. Von dem Nachbeschleunigungsorgan 16 erfährt das gehäckselte Erntegut 9 eine Beschleunigung, damit ein sicherer Austritt aus der dem Nachbeschleunigungsorgan 16 nachgeordneten Überladevorrichtung 17 in ein hier nicht näher dargestelltes Transportfahrzeug gewährleistet wird.

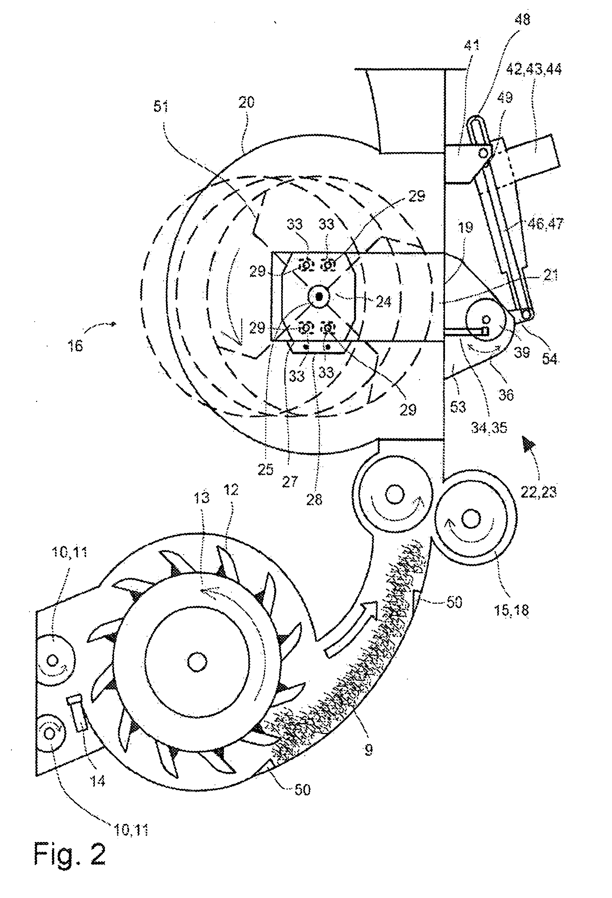

Fig. 2 zeigt nun ein in vergrößerter Schnittdarstellung den in Fig. 1 mit A gekennzeichneten Bereich, der in Pfeilrichtung erfolgenden Gutflusslinie, eine Häcksaltrommel 13, die Nachzerkleinerungseinrichtung 15 in Form von Konditionierwalzen 18 und ein Nachbeschleunigungsorgan 16. Die Konditionserwalzen 18 übergeben das gehäckselte Erntegut 9 an das Nachbeschleunigungsorgan 16, um von dort aus über die horizontal und vertikal verstellbare in Fig. 1 dargestellte Überladevorrichtung 17 auf eine nicht abgebildete, der Überladevorrichtung 17 zugeordnete Transportvorrichtung gefördert zu werden. Hierbei durchströmt das gehäckselte Erntegut 9 den zwischen dem Nachbeschleunigungsorgan 16 und der Innenwand 19 des Maschinengehäuses 20 liegenden Erntegutdurchgangsspalt 21. Erfindungsgemäß wird das Nachbeschleunigungsorgan 16 mittels eines mit diesem in Wirkverbindung stehenden als Getriebesystem 22 ausgebildeten Verschsebemechanismus 23 gegenüber der Innenwand 19 des Maschinengehäuses 20 verstellt, wobei die Fixierung und das Verschieben des Nachbeschleunigungsorgans 16 voneinander entkoppelt erfolgt. Vorteilhaft ist dadurch einerseits eine Veränderung der Weite des Emtegutdurchgangsspaltes 21 erreichbar und andererseits im Falle eines Schadens am Verschiebmechanismus 23, insbesondere eines Bruchs von einzelnen noch näher zu beschreibenden Verstellgliedern des Verschiebemechanismus 23 dennoch eine Fortführung des Ernteprozesses möglich ist. Im achsenendseitigen Bereich des Nachbeschleunigungsorgans 16 ist eine von einem Lager 24 umschlossenen Achse 25 des Nachbeschleunigungsorgans 16 umfassende Gleitvorrichtung 26 angeordnet. Die bodenseitige Unterkante 27 der Gleitvorrichtung 26 liegt verschiebebeweglich auf einer außenseitig am Maschinengehäuse 20 angeordneten Führungsfläche 28 auf. Die reibschlüssige Fixierung der Gleitvorrichtung 26 am Maschinengehäuse 20 erfolgt über geeignete Haltelemente 29, so dass sämtliche auf das Nachbeschleunigungsorgan 16 einwirkenden Kräfte von den am Maschinengehäuse 20 außenseitig angeordneten Führungsflächen 28 sowie von den Halteelementen 29 aufgenommen wird, völlig entkoppelt vom Verschiebemechanismus 23. Als dafür besonders geeignet haben sich Halteelemente 29, die in Langlöchern 33 gelagert und als mit Federn 30 umfassende Schraubverbindungen 31 ausgeführt sind. Die Federn 31 können nach Bedarf in ihrer Spannung verändert werden, so dass eine optimale Fixierung der Gleitvorrichtung 26 erreicht werden kann.

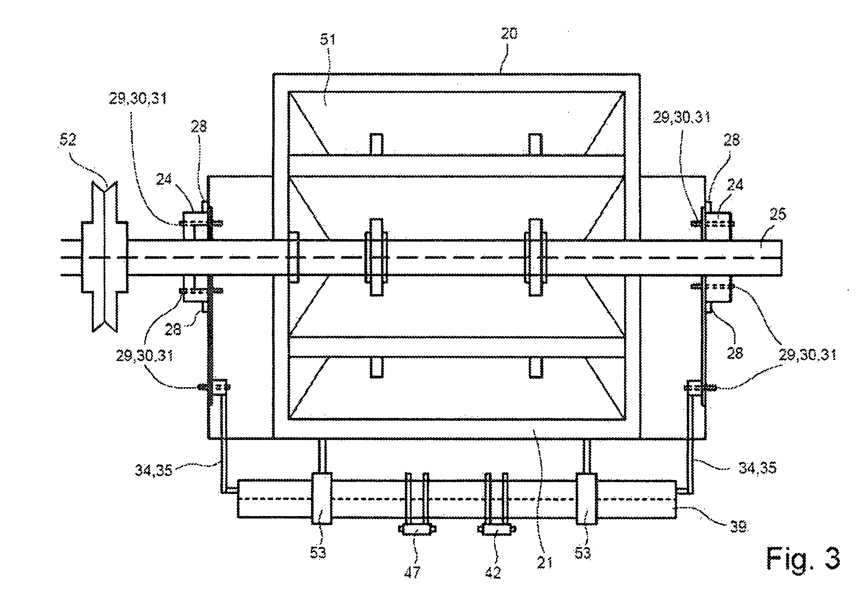

Wie sich nun naher aus Fig. 3 ergibt, ist die Achse 25 des über eine Riemenscheibe 52 angetriebenen Nachbeschleunigungsorgans 16 in den jeweils achsenendseitig angeordneten Gleitvorrichtungen 26 gelagert. Die die Achse 25 umschließenden Lager 24 sind dabei in die Gleitvorrichtungen 26 integriert. Die bodenseitigen Unterkanten 27 der Gleitvorrichtungen 26 liegen verschiebebeweglich auf außenseitig des Maschinengehäuses 20 angeordnete Führungsflächen 28 auf. Zur Verstellung der Position des Nachbeschleunigungsorgans 16 im Maschinengehäuse 20 dient der wenigstens an einem endseitigen Bereich der Achse 25 angreifende Verschlebemechanismus 23. Eine besonders zweckmäßige Ausführung ergibt sich, wenn der Verschiebemechanismus 23, wie in Fig. 3 dargestellt, an beiden dem Nachbeschleunigungsorgan 16 zugeordneten Gleitvorrichtungen 26 angreift. Hierdurch erfolgt die Abstandsveränderung des Nachbeschleunigungsorgans 16 zur Innenwand 19 des Maschinengehäuses 20 gleichmäßig innerhalb der im Maschinegehäuse 20 dafür vorgesehenen Langlöcher 33. Die Verschiebung selbst erfolgt über den größtenteils außenseitig am Maschinengehäuse 20 angeordneten als Geinebesystem 22 ausgebildeten Verschiebemechanismus 23. Das Getriebesystem 22 weist zwei jeweils einen Endes mit den Gleitvorrichtungen 26 des Nachbeschleunigungsorgans 16 drehbar verbundenen und als Koppelstangen 34 ausgeführte Getriebeglieder 35 auf, Diese stehen anderen Endes mit einem weiteren um eine Kurvenbahn 36 drehbar gelagerten und als durchgehende Welle 37 ausgeführten Getriebeglied 38 in Wirkverbindung, wobei die Koppelstangen 34 zur Erreichung einer Verschiebung der Gleitvorrichtungen 26 außermittig an der jeweiligen Wellenstirnseite 39 gelenkig angeordnet sind. Das als Welle 37 ausgeführte weitere Getriebeglied 38 ist über Lagerelemente 53 drehbar gelagert mit dem Maschinengehäuse 20 verbunden. Im Weiteren ist die Welle 37 von einem Hebelarm 40 umschlossen, dem endseitig ein über eine Haltevorrichtung 41 mit dem Maschinengehäuse 20 verbundenes jeweils endseitig drehbar gelagertes teleskopierbares Stellglied 42 zugeordnet ist. Zweckmäßigerweise ist das teleskopierbare Stellglied 42 als Hydraulikzylinder 43 oder als elektrischer Linearmotor 44 ausgeführt, um eine feinfühlige und exakte Verstellung der Position des Nachbeschleunigungsorgans 16 innerhalb des Maschinengehäuses 20 erreichen zu können. Denkbar ist zudem, wenigstens ein weiteres teleskopierbares Stellglied 42 in Form eines Hydraulikzylinders 43 bzw, elektrischen Linearmotors 44 vorzusehen. Durch die Verwendung eines Hydraulikzylinders 43 oder eines elektrischen Linearmotors 44 wird eine stufenlose und/oder stufige Verstellung des Erntegutdurchgangsspaltes 21 erreicht.

Die Verstellung der Gleitvorrichtungen 26 und somit des Nachbeschieunigungsorgans 16 erfolgt im dargestellten Ausführungsbeispiel durch ein Verschwenken der Welle 37 um die Kurvenbahn 36 entlang der Gutflusslinie mittels des teleskopierbaren Stellgliedes 42, wobei durch das Verschwenken der Welle 37 die damit endseitig in Wirkverbindung stehenden Koppelstangen 34 synchron ihren Abstand zur Achse 25 des Nachbeschleunigungsorgans verändern. Zur Verhinderung eines Schadens am Nachbeschleunigungsorgan 16 bzw, am Maschinengehäuse 20 durch ein ungewolltes Verstellen der Position des Nachbeschleunigungsorgans 16 außerhalb eines zulässigen Verstellbereichs umschließt dem als Welle 37 ausgeführten weiteren Getriebeglied 38 ein weiterer Hebelarm 54, dem endseitig eine mit dem Maschinengehäuse 20 drehbar gelagerte als längenveränderliches Stellelement 46 ausgeführte Rückhaltevorrichtung 47 zugeordnet ist. Um einen festgelegten Verstellbereich nicht verlassen zu können, umfasst die Rückhaltevorrichtung 47 einen oberen Endanschlag 48 sowie einen unteren Endanschlag 49.

Im weiteren sind in Fig. 2 innerhalb des zur Beförderung des gehäckseltem Erntegutes bestimmten Maschinengehäuses 20 angeordnete Sensoren 50 dargestellt. Im Ausführungsbeispiel befinden sich die Sensoren 50 unmittelbar hinter der Häckseltrommel 13, vor der Nachzerkleinerungseinrichtung 15 und/oder hinter dem Nachbeschleunigungsorgan 16, um dass gehäckselte Erntegut 9 vom Einzug bis zum Auswurf sensorisch zu erfassen. Das von den Sensoren 50 generierte Eingangssignal X wird an eine an sich bekannte und deshalb hier nicht näher dargestellte Auswerte- und Steuereinrichtung übermittelt Die Auswerte- und Steuereinrichtung steht in Wirkverbindung mit dem teleskopierbaren Stellglied 42 des als Getriebesystem 22 ausgebildeten Verschiebemechanismus 23. Aufgrund des generierten Eingangssignals X ermittelt die Auswerte- und Steuereinrichtung ein die Verstellung des Nachbeschleunigungsorgans 16 in horizontaler Richtung zur Gutflusslinie auslösendes Ausgangssignal Y. Insbesondere sind die Dichte, die Geschwindigkeit und die Feuchte des gehäckselten Erntegutes 9 die Weite des Erntegutdurchgangsspaltes 21 bestimmende Faktoren, wobei die Erntegutdichte und die Erntegutgeschwiredigkeit in an sich bekannter Weise von den Sensoren 50 zur Ermittlung des Durchsatzes sensiert werden. Als Korrekturfaktor dient dabei die sensierte Erntegutfeuchte. Ergibt diese Auswertung, dass die Durchsatzmenge gering ist, so bewegt sich das Nachbeschleunigungsorgan 16 in horizontaler Richtung zur Gutflusslinie auf die innenwand 19 des Maschinengehäuses 20 zu. Dies bedingt eine Verringerung der Weite des Erntgutdurchgangsspaltes 21, wodurch das gehäckselte Erntegut 9 seinerseits aufgrund der nun verstärkten Einwirkung des Nachbeschleunigungsorgans 16 eine Beschleunigung erfährt. Im Fall, dass eine hohe Durchsatzmenge sensiert wird, wird die Weite des Erntegutdurchgangsspaltes 21 mittels des Verschiebemechanismus 23 vergrößert, so dass das gehäckselte Erntegut 9 gleichmäßig ohne die Verursachung von Verstopfungen das Maschinengehäuse 20 durchläuft. Im weiteren kann die Verstellung der Achse 25 des Nachbeschleunigungsorgans 16 aufgrund der im Ernteprozess eingenommenen Stellung der Überladevorrichtung 17 erfolgen, wobei die Überladevorrichtung 17 in an sich bekannter Weise um eine horizontale sowie um eine vertikale Achse verschwenkbar ist. Die Ermittlung der exakten Stellung der Überladeeinrichtung 17 erfolgt dabei über hier nicht näher dargestellte der Überladeeinrichtung 17 zugeordneten Lagesensoren, wobei die generierten Eingangssignale der Auswerte- und Steuereinrichtung zur Auswertung und zur Generierung eines Ausgangssignals übermittelt werden. Bedeuten die im Ernteprozess sensierten Eingangssignale der Lagesensoren, dass eine große Wurfleistung und damit eine hohe Beschleunigung des zu übenadenden Erntegutes 9 benötigt wird, so bewegt sich das Nachbeschleunigungsorgan 16 auf die Innenwand 19 des Maschinengehäuses 20 zu, wodurch ein verstärktes Einwirken des Nachbeschleunigungsorgans 16 auf das zu fördernde Erntegut 9 bewirkt und damit dessen höhere Beschleunigung erreicht werden kann. Bedeuten dagegen die im Ernteprozess ermittelten Eingangssignale, dass eine geringere Wurfleistung und damit niedrigere Beschleunigung des zu fördernden Erntegutes 9 benötigt wird, so bewegt sich das Nachbeschleunigungsorgan 16 entgegengesetzt von der Innenwand 19 des Maschinengehäuses 20.

Schließlich kann die Verstellung der Position des Nachbeschleunigungsorgans 16 in Abhängigkeit vom Verschleißzustand der dem Nachbeschleunigungsorgan 16 zugeordneten Schaufeln 51 erfolgen, so dass die für den Ernteprozess gefundene optimale Weite des Erntegutdurchgangsspaltes, insbesondere im Fall von langen Ernteeinsätzen, trotz des auftretenden Schaufelverschleißes konstant bleibt, wobei die Ermittlung des Verschleißzustandes über geeignete, jedoch nicht näher dargestellte, den Abstand zwischen Innenwand zum Umfangskreis des Nachbeschleunigsorgan ermittelnde Sensoren erfolgt.

Auch wenn die Erfindung lediglich anhand eines Ausführungsbeispiels beschrieben wurde, erschließen sich dem Fachmann im Lichte der vorstehenden Beschreibung sowie der Zeichnung viele verschiedenartige Alternativen, Modifikationen und Varianten, die unter die Erfindung fallen.

### Bezugszeichenliste

| | | | |
|---|---|---|---|
| 1 | selbstfahrender Feldhäcksler | 33 | Langloch |
| 2 | landwirtschaftliche Erntemaschine | 34 | Koppelstange |
| 3 | Rahmen | 35 | Getriebeglied |
| 4 | Rad | 36 | Kurvenbahn, Rotationskreis |
| 5 | Rad | 37 | Welle |
| 6 | Bediener | 38 | Getriebeglied |
| 7 | Fahrerkabine | 39 | Wellenstirnseite |
| 8 | Vorsatzgerät | 40 | Hebelarm |
| 9 | Erntegut | 41 | Haltevorrichtung |
| 10 | Einzugs- und Vorpresswalzen | 42 | teleskopierbares Stellglied |
| 11 | Einzugs- und Vorpresswalzen | 43 | Hydraulikzylinder |
| 12 | Messer | 44 | elektrischer Linearmotor |
| 13 | Häckseltrommel | 45 | Hebelarm |
| 14 | Gegenschneide | 46 | Stellelement |
| 15 | Nachzerkleinerungseinrichtung | 47 | Rückhaltevorrichtung |
| 16 | Nachbeschleunigungsorgan | 48 | oberer Endanschlag |
| 17 | Überladevorrichtung | 49 | unterer Endanschlag |
| 18 | Konditionierwalzen | 50 | Sensor |
| 19 | Innenwand | 51 | Schaufel |
| 20 | Maschinengehäuse | 52 | Riemenscheibe |
| 21 | Erntegutdurchgangsspalt | 53 | Lagerelement |
| 22 | Getriebesystem | 54 | Hebelarm |
| 23 | Verschiebemechanismus | | |
| 24 | Lager | X | Eingangssignal |
| 25 | Achse | Y | Ausgangssignal |
| 26 | Gleitvorrichtung | | |
| 27 | Unterkante | | |
| 28 | Führungsfläche | | |
| 29 | Halteelemente | | |
| 30 | Feder | | |
| 31 | Schraubverbindung | | |
| 32 | Riemenscheibe | | |

## Patentansprüche

1. Selbstfahrender Feldhäcksler mit einer Vorrichtung zur Einstellung des Erntegutdurchgangsspaltes (21) am Nachbeschleunigungsorgan (16), der über wenigstens ein Vorsatzgerät (8) zur Aufnahme des Ernteguts (9) verfügt und dem wenigstens ein Bearbeitungsgerät zugeordnet ist, wobei das von dem Bearbeitungsgerät abgegebene Erntegut (9) zumindest ein wenigstens teilweise von einem Maschinengehäuse (20) ummanteltes Nachbeschleunigungsorgan (16) durchläuft, wobei das Nachbeschleunigungsorgan (16) mittels eines Verschiebemechanlsmus (23) relativ zum Maschinengehäuse (20) bewegbar ist,
**dadurch gekennzeichnet,**
**dass** die Fixierung des Nachbeschleunigungsorgans (16) am Maschinengehäuse (20) in der Weise entkoppelt vom Verschiebemechanismus (23) erfolgt, dass die auf das Nachbeschleunigungsorgan (16) einwirkenden Kräfte über dem Maschinengehäuse (20) zugeordnete Führungsflächen (28) und mit dem Maschinengehäuse reibschlussig verbundene Halteelemente (29) abgestützt werden.

2. Selbstfahrender Feldhäcksler mit einer Vorrichtung zur Einstellung des Erntegutdurchgangsspaltes (21) am Nachbeschleunigungsorgan (16) nach Anspruch 1,
**dadurch gekennzeichnet,**
**dass** zur Fixierung des Nachbeschleunigungsorgans (16) diesem jeweils endseitig Gleltvorrichtungen (26) zugeordnet sind, deren bodenseitige Unterkanten (27) auf mit dem Maschinengehäuse (20) verbundenen Führungsflächen (28) aufliegen, wobei die Gleitvorrichtungen (26) mittels wenigstens einem Halteelement (29) am Maschinengehäuse (20) verschlebebeweglich fixiert sind.

3. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** die Verstellung des Nachbeschleunigungsorgans (16) mittels eines als Getriebesystem (22) ausgebildeten Verschiebemechanismus (23) erfolgt.

4. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** das Getriebesystem (22) im Wesentlichen von wenigstens zwei jeweils einen Endes mit den Gleitvorriohtungen (26) des Nachbeschleunigungsorgans (16) drehbar verbundenen Getriebeglledern (35) gebildet wird, welche anderen Endes mit einem weiteren um eine Kurvenbahn (36) drehbar gelagerten Getriebeglied (38) in Wirkverbindung stehen, wobei durch das weitere Getriebeglied die Lage der wenigstens zwei Getriebeglieder (35) synchron verstellbar ist.

5. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** das weitere Getriebeglied (38) als durchgehende Welle (37) ausgebildet ist und mittels wenigstes zwei Lagerelemente (53) drehbar gelagert am Maschinengehäuse (20) befestigt ist.

6. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** dem weiteren Getriebeglied (38) wenigstens ein teleskopierbares Stellglied (42) zugeordnet ist, wobei das teleskopierbare Stellglied (42) einen Endes über einen Gelenkpunkt mit einem dem weiteren Getriebeglied (38) zugeordneten Hebelarm (40) und anderen Endes über einen Gelenkpunkt mit einer am Maschinegehäuse (20) befestigten Haltevorrichtung (41) verbunden ist.

7. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** die synchrone Verstellung der wenigstens zwei Getriebeglieder (35) über das wenigstens eine mit dem weiteren Getriebeglied (38) in Wirkverbindung stehende teleskoplerbare Stellglied (42) erfolgt.

8. Selbstfahrender Feldhäcksler mit einer Vorrichtung zur Einstellung des Erntegutdurchgangsspaltes (21) am Nachbaschleunigungsorgan (16) nach einem oder mehreren der vorangehenden Ansprüche,
**dadurch gekennzeichnet,**
**dass** das wenigstens eine teleskopierbare Stellglied (42) als Hydraulikzylinder (43) oder als elektrischer Linearmotor (44) ausgeführt Ist.

9. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** die Verstellung des weiteren Getriebegliedes (38) auf dessen Kurvenbahn (36) entlang der Gutflussrichtung erfolgt.

10. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** dem weiteren Getriebeglied (38) eine Rückhaltevorrichtung (47) zugeordnet ist, wobei die Rückhaltevorrichtung (47) einen oberen und einen unteren Endanschlag (48, 49) aufweiset.

11. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** die wenigstens zwei Getriebeglieder (35) als Koppelstangen (34) ausgebildet sind.

12. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** die Verstellung der Achse (25) des Nachbeschleunigungsorgans (16) aufgrund der Stellung der dem Nachbeschleunigungsorgan (16) nachgeordneten Überladevorrichtung (17) in horizontaler Richtung erfolgt.

13. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** die Verstellung der Achse (25) des Nachbeschleunigungsorgans (16) in Abhängigkeit vom Verschleißzustand der dem Nachbeschleunigungsorgan (16) zugeordneten Schaufeln (51) in horizontaler Richtung erfolgt.

14. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** wenigstens ein Sensor (50) an zumindest einer Stelle innerhalb des Maschinengehäuses (20) angebracht ist und der Sensor (50) die Feuchte und/oder Dichte und/oder Geschwindigkeit des Erntegutes (9) ermittelt.

15. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet, dass**
die Verstellung der Achse (25) des Nachbeschleunigungsorgans (16) aufgrund der von dem Sensor (50) generierten Sensorsignale X,Y in horizontaler Richtung erfolgt.

16. Selbstfahrender Feldhäcksler mit einer Vorrichtung zur Einstellung des Erntegutdurchgangsspaltes (21) am Nachbeschleunigungsorgan (16) nach einem oder mehreren der vorangehenden Ansprüche,
**dadurch gekennzeichnet,**
**dass** Innerhalb der Fahrerkabine. (7) der landwirtschaftlichen Erntemaschine (2) eine Bedieneinheit zur Bedienung des Verschiebemeehanismus (23) vorgesehen ist.

## Claims

1. A self-propelled forage harvester having a device for adjusting the crop material passage gap (21) at the post-acceleration member (16), which has at least one front-mounted implement (8) for picking up the crop material (9) and with which at least one processing implement is associated, wherein the crop material (9) discharged by the processing implement passes through at least one post-acceleration member (16) which is at least partially enclosed by a machine housing (20), wherein the post-acceleration member (16) is movable by means of a displacer mechanism (23) relative to the machine housing (20),
**characterised in that**
fixing of the post-acceleration member (16) to the machine housing (20) is effected in uncoupled relationship from the displacer mechanism (23) in such a way that the forces acting on the post-acceleration member (16) are supported by way of guide surfaces (28) associated with the machine housing (20) and holding elements (29) connected to the machine housing in frictionally locking relationship.

2. A self-propelled forage harvester having a device for adjusting the crop material passage gap (21) at the post-acceleration member (16) according to claim 1 **characterised in that** for fixing the post-acceleration member (16) associated therewith at respective ends are slide devices (26), the bottom-side lower edges (27) of which lie on guide surfaces (28) connected to the machine housing (20), wherein the slide devices (26) are displaceably fixed to the machine housing (20) by means of at least one holding element (29).

3. A self-propelled forage harvester having a device for adjusting the crop material passage gap (21) at the post-acceleration member (16) according to one or more of the preceding claims **characterised in that** displacement of the post-acceleration member (16) is effected by means of a displacer mechanism (23) in the form of a transmission system (22).

4. A self-propelled forage harvester having a device for adjusting the crop material passage gap (21) at the post-acceleration member (16) according to one or more of the preceding claims **characterised in that** the transmission system (22) is substantially formed by at least two transmission members (35) rotatably connected at a respective end to the sliding devices (26) of the post-acceleration member (16), which at the other end are operatively connected to a further transmission member (38) mounted rotatably about a curved path (36), wherein the position of the at least two transmission members (35) is synchronously adjustable by the further transmission member.

5. A self-propelled forage harvester having a device for adjusting the crop material passage gap (21) at the post-acceleration member (16) according to one or more of the preceding claims **characterised in that** the further transmission member (38) is in the form of a continuous shaft (37) and is fixed to the machine housing (20) in rotatably supported relationship by means of at least two bearing elements (53).

6. A self-propelled forage harvester having a device for adjusting the crop material passage gap (21) at the post-acceleration member (16) according to one or more of the preceding claims **characterised in that** at least one telescopic control member (42) is associated with the further transmission member (38), wherein the telescopic control member (42) is connected at one end by way of a pivot point to the lever arm (40) associated with the further transmission member (38) and at the other end by way of a pivot point to a holding device (41) fixed to the machine housing (20).

7. A self-propelled forage harvester having a device for adjusting the crop material passage gap (21) at the post-acceleration member (16) according to one or more of the preceding claims **characterised in that** the synchronous displacement of the at least two transmission members (35) is effected by way of the at least one telescopic control member (42) operatively connected to the further transmission member (38).

8. A self-propelled forage harvester having a device for adjusting the crop material passage gap (21) at the post-acceleration member (16) according to one or more of the preceding claims **characterised in that** the at least one telescopic control member (42) is in the form of a hydraulic cylinder (43) or an electric linear motor (44).

9. A self-propelled forage harvester having a device for adjusting the crop material passage gap (21) at the post-acceleration member (16) according to one or more of the preceding claims **characterised in that** the displacement of the further transmission member (38) is effected on the curved path (36) thereof along the material flow direction.

10. A self-propelled forage harvester having a device for adjusting the crop material passage gap (21) at the post-acceleration member (16) according to one or more of the preceding claims **characterised in that** a retaining device (47) is associated with the further transmission member (38), the retaining device (47) having an upper and a lower end abutment (48, 49).

11. A self-propelled forage harvester having a device for adjusting the crop material passage gap (21) at the post-acceleration member (16) according to one or more of the preceding claims **characterised in that** the at least two transmission members (35) are in the form of coupling bars (34).

12. A self-propelled forage harvester having a device for adjusting the crop material passage gap (21) at the post-acceleration member (16) according to one or more of the preceding claims **characterised in that** the displacement of the axis (25) of the post-acceleration member (16) is effected on the basis of the position of the transloading device (17) arranged downstream of the post-acceleration member (16) in a horizontal direction.

13. A self-propelled forage harvester having a device for adjusting the crop material passage gap (21) at the post-acceleration member (16) according to one or more of the preceding claims **characterised in that** the displacement of the axis (25) of the post-acceleration member (16) is effected in dependence on the wear condition of the blades (51) associated with the post-acceleration member (16) in a horizontal direction.

14. A self-propelled forage harvester having a device for adjusting the crop material passage gap (21) at the post-acceleration member (16) according to one or more of the preceding claims **characterised in that** at least one sensor (50) is mounted at at least one location within the machine housing (20) and the sensor (50) ascertains the moisture content and/or density and/or speed of the crop material (9).

15. A self-propelled forage harvester having a device for adjusting the crop material passage gap (21) at the post-acceleration member (16) according to one or more of the preceding claims **characterised in that** the displacement of the axis (25) of the post-acceleration member (16) is effected on the basis of the sensor signals X, Y generated by the sensor (50) in a horizontal direction.

16. A self-propelled forage harvester having a device for adjusting the crop material passage gap (21) at the post-acceleration member (16) according to one or more of the preceding claims **characterised in that** an operating unit for operation of the displacer mechanism (23) is provided within the driving cab (7) of the agricultural harvesting machine (2).

## Revendications

1. Ensileuse automotrice avec un dispositif pour régler la fente de passage de produit de récolte (21) sur l'organe de post-accélération (16), laquelle dispose d'au moins un outil frontal (8) pour ramasser le produit de récolte (9) et à laquelle est associé au moins un outil de traitement, le produit de récolte (9) amené par l'outil de traitement traversant au moins un organe de post-accélération (16) entouré au moins partiellement par un carter de machine (20), l'organe de post-accélération (16) pouvant être déplacé par rapport au carter de machine (20) au moyen d'un mécanisme de déplacement (23), **caractérisée en ce que** le moyen d'assujettissement de l'organe de post-accélération (16) sur le carter de machine (20) est dissocié du mécanisme de déplacement (23), de sorte que les forces agissant sur l'organe de post-accélération (16) sont absorbées par l'intermédiaire de surfaces de guidage (28) associées au carter de machine (20) et d'éléments de maintien (29) reliés par friction au carter de machine.

2. Ensileuse automotrice avec un dispositif pour régler la fente de passage de produit de récolte (21) sur l'organe de post-accélération (16) selon la revendication 1, **caractérisée en ce**, pour assujettir l'organe de post-accélération (16), des dispositifs de glissement (26) sont associés à celui-ci à ses extrémités, dont les bords inférieurs (27) côté fond reposent sur des surfaces de guidage (28) reliées au carter de machine (20), les dispositifs de glissement (26) étant assujettis sur le carter de machine (20) de manière déplaçable au moyen d'au moins un élément de maintien (29).

3. Ensileuse automotrice avec un dispositif pour régler la fente de passage de produit de récolte (21) sur l'organe de post-accélération (16) selon une ou plusieurs des revendications précédentes, **caractérisée en ce que** le réglage de l'organe de post-accélération (16) est effectué au moyen d'un mécanisme de déplacement (23) conformé en système de transmission (22).

4. Ensileuse automotrice avec un dispositif pour régler la fente de passage de produit de récolte (21) sur l'organe de post-accélération (16) selon une ou plusieurs des revendications précédentes, **caractérisée en ce que** le système de transmission (22) est formé essentiellement par au moins deux éléments de transmission (35) qui, à une extrémité, sont reliés de manière tournante aux dispositifs de glissement (26) de l'organe de post-accélération (16) et qui, à l'autre extrémité, coopèrent avec un élément de transmission supplémentaire (38) monté tournant autour d'une came (36), la position desdits au moins deux éléments de transmission (35) étant réglable de manière synchrone par l'intermédiaire de l'élément de transmission supplémentaire.

5. Ensileuse automotrice avec un dispositif pour régler la fente de passage de produit de récolte (21) sur l'organe de post-accélération (16) selon une ou plusieurs des revendications précédentes, **caractérisée en ce que** l'élément de transmission supplémentaire (38) est conformé en arbre continu (37) et est monté tournant sur le carter de machine (20) au moyen d'au moins deux éléments de palier (53).

6. Ensileuse automotrice avec un dispositif pour régler la fente de passage de produit de récolte (21) sur l'organe de post-accélération (16) selon une ou plusieurs des revendications précédentes, **caractérisée en ce qu'**au moins un actionneur télescopique (42) est associé à l'élément de transmission supplémentaire (38), l'actionneur télescopique (42) étant relié, à l'une de ses extrémités, par l'intermédiaire d'un point d'articulation, à un bras de levier (40) associé à l'élément de transmission supplémentaire (38) et, à son autre extrémité, par l'intermédiaire d'un point d'articulation, à un dispositif de maintien (41) fixé au carter de machine (20).

7. Ensileuse automotrice avec un dispositif pour régler la fente de passage de produit de récolte (21) sur l'organe de post-accélération (16) selon une ou plusieurs des revendications précédentes, **caractérisée en ce que** le réglage synchrone desdits au moins deux éléments de transmission (35) est effectué par l'intermédiaire dudit au moins un actionneur télescopique (42) coopérant avec l'élément de transmission supplémentaire (38).

8. Ensileuse automotrice avec un dispositif pour régler la fente de passage de produit de récolte (21) sur l'organe de post-accélération (16) selon une ou plusieurs des revendications précédentes, **caractérisée en ce que** ledit l'actionneur télescopique (42) est réalisé sous la forme d'un vérin hydraulique (43) ou d'un moteur linéaire électrique (44).

9. Ensileuse automotrice avec un dispositif pour régler la fente de passage de produit de récolte (21) sur l'organe de post-accélération (16) selon une ou plusieurs des revendications précédentes, **caractérisée en ce que** le réglage de l'élément de transmission supplémentaire (38) sur sa came (36) est effectué suivant la direction du flux de produit.

10. Ensileuse automotrice avec un dispositif pour régler la fente de passage de produit de récolte (21) sur l'organe de post-accélération (16) selon une ou plusieurs des revendications précédentes, **caractérisée en ce qu'**un dispositif de retenue (47) est associé à l'élément de transmission supplémentaire (38), le dispositif de retenue (47) comportant une butée de fin de course supérieure et une butée de fin de course inférieure (48, 49).

11. Ensileuse automotrice avec un dispositif pour régler la fente de passage de produit de récolte (21) sur l'organe de post-accélération (16) selon une ou plusieurs des revendications précédentes, **caractérisée en ce que** lesdits au moins deux éléments de transmission (35) sont réalisés sous la forme de tiges de couplage (34).

12. Ensileuse automotrice avec un dispositif pour régler la fente de passage de produit de récolte (21) sur l'organe de post-accélération (16) selon une ou plusieurs des revendications précédentes, **caractérisée en ce que** l'axe (25) de l'organe de post-accélération (16) est réglé en direction horizontale sur la base de la position du dispositif de transfert (17) placé à la suite de l'organe de post-accélération (16).

13. Ensileuse automotrice avec un dispositif pour régler la fente de passage de produit de récolte (21) sur l'organe de post-accélération (16) selon une ou plusieurs des revendications précédentes, **caractérisée en ce que** l'axe (25) de l'organe de post-accélération (16) est réglé en direction horizontale en fonction de l'état d'usure des pales (51) associées à l'organe de post-accélération (16).

14. Ensileuse automotrice avec un dispositif pour régler la fente de passage de produit de récolte (21) sur l'organe de post-accélération (16) selon une ou plusieurs des revendications précédentes, **caractérisée en ce qu'**au moins un capteur (50) est installé à au moins un endroit à l'intérieur du carter de machine (20), lequel capteur (50) déterminant l'humidité et/ou la densité et/ou la vitesse du produit de récolte (9).

15. Ensileuse automotrice avec un dispositif pour régler la fente de passage de produit de récolte (21) sur l'organe de post-accélération (16) selon une ou plusieurs des revendications précédentes, **caractérisée en ce que** l'axe (25) de l'organe de post-accélération (16) est réglé en direction horizontale sur la base des signaux de détection X, Y générés par le capteur (50).

16. Ensileuse automotrice avec un dispositif pour régler la fente de passage de produit de récolte (21) sur l'organe de post-accélération (16) selon une ou plusieurs des revendications précédentes, **caractérisée en ce qu'**une unité de commande pour 1a manoeuvre du mécanisme de déplacement (23) est prévue à l'intérieur de la cabine de conduite (7) de la machine agricole de récolte (2).
